# EUROPÄISCHE PATENTSCHRIFT

(11) **EP 1 698 516 B1**
(45) Veröffentlichungstag und Bekanntmachung des Hinweises auf die Patenterteilung: **08.07.2009**
(21) Anmeldenummer: 06003567.2
(22) Anmeldetag: 22.02.2006
(51) Int. Cl.: B60R 5/04

(54) **Zwangskopplungseinrichtung**
Forced coupling device
Dispositif de couplage forcé

(30) Priorität: 02.03.2005 DE 102005010762
(43) Veröffentlichungstag der Anmeldung: 06.09.2006
(73) Patentinhaber: BOS GmbH & Co. KG, 73760 Ostfildern (DE)
(72) Erfinder: Schaller, Wolfgang Dr., 73728 Esslingen (DE); Maier, Matthias, 73733 Esslingen (DE); Walter, Herbert, 73061 Ebersbach (DE); Sieg, Wolfgang, 70437 Stuttgart (DE)
(74) Vertreter: Patentanwälte Ruff, Wilhelm, Beier, Dauster & Partner

(56) Entgegenhaltungen:
- WO-A-98/24657
- GB-A- 635 187
- US-A- 4 728 141

## Beschreibung

Die Erfindung betrifft eine Zwangskopplungseinrichtung zwischen einem um eine Scharnierachse an einer Fahrzeugkarosserie angelenkten, beweglichen Karosserieteil und wenigstens einem Führungsmittel zur Verlagerung einer Laderaumabdeckung zwischen zwei unterschiedlichen Funktionsstellungen, wobei die Zwangskopplungseinrichtung mechanische Bewegungsübertragungsmittel aufweist, die mit dem Karosserieteil einerseits und dem Führungsmittel andererseits in Wirkverbindung stehen.

Aus der WO 98/24657 A2 ist eine Zwangskopplungseinrichtung zwischen einer Heckklappe eines Kraftfahrzeugs und Führungsmitteln zur Verlagerung einer Laderaumabdeckung zwischen einer horizontalen Funktionsstellung und einer nach oben verlagerten Komfortstellung bekannt. Die Zwangskopplungseinrichtung umfasst Bewegungsübertragungsmittel in Form von drucksteifen Hebelstangen, die innenseitig an der Heckklappe einerseits und an den fahrzeugseitigen Führungen für ein Auszugsprofil der Laderaumabdeckung andererseits angelenkt sind. Die Hebelstangen können beim Öffnen und Schließen der Heckklappe ein Verletzungs- oder Beschädigungspotential darstellen.

GB 635 187 offenbart eine Zwangskopplungseinrichtung gemäß den Oberbegriff des Anspruchs 1.

Aufgabe der Erfindung ist es, eine Zwangskopplungseinrichtung der eingangs genannten Art zu schaffen, die ein Gefährdungs- oder Beschädigungspotential bei einer Karosserieteilbewegung und einer zwangsgekoppelten Verlagerung der Laderaumabdeckung vermeidet oder zumindest wesentlich reduziert.

Diese Aufgabe wird dadurch gelöst, dass die Bewegungsübertragungsmittel im Bereich einer Scharnieranordnung des Karosserieteils angeordnet sind. Die Scharnieranordnung für das Karosserieteil befindet sich in einem Rand- oder Rahmenbereich eines Karosserieausschnittes, den das Karosserieteil verdecken soll. Falls das Karosserieteil als Heckklappe für einen Personenkraftwagen ausgeführt ist, befindet sich die Scharnieranordnung in einem Dachrahmenbereich und ist zumindest teilweise hinter Innenraumverkleidungen verdeckt. Im Bereich der Scharnieranordnung angeordnet bedeutet eine unmittelbare Zuordnung des wenigstens einen Bewegungsübertragungsmittels zu wenigstens einem Scharnierteil der Scharnieranordnung. Vorzugsweise erfolgt eine Zuordnung des Bewegungsübertragungsmittels zu einem heckklappenseitigen Teil der Scharnieranordnung, das die Heckklappenbewegung mitmacht.

In Ausgestaltung der Erfindung umfassen die Bewegungsübertragungsmittel ein Übersetzungsgetriebe, um einen Schwenkweg des Karosserieteiles auf einen Verlagerungsweg der Führungsmittel abzustimmen. Diese Ausgestaltung ist vorteilhaft, da aufgrund der Anordnung der Bewegungsübertragungsmittel im Bereich der Scharnieranordnung der Schwenkweg aufgrund der Nähe zur Scharnierachse vergleichsweise gering ist. Das Übersetzungsgetriebe übersetzt den relativ geringen Schwenkweg in den größeren Verlagerungsweg für die Laderaumabdeckung. Vorzugsweise ist der Verlagerungsweg der Laderaumabdeckung durch eine obere Endposition und eine untere Endposition begrenzt, wobei die obere Endposition eine nach oben verlagerte Komfortstellung der Laderaumabdeckung und die untere Endposition eine etwa horizontal ausgerichtete Funktionsstellung der Laderaumabdeckung bildet.

In weiterer Ausgestaltung der Erfindung umfassen die Bewegungsübertragungsmittel eine Zugmittelanordnung, die mit den Führungsmitteln in Wirkverbindung steht, und die Scharnieranordnung umfasst ein exzentrisch zu der Scharnierachse angeordnetes und mit dem Karosserieteil festes Umlenkmittel, das einen Zugmittelabschnitt der Zugmittelanordnung bei einer Bewegung des Karosserieteiles auslenkt. Die Umlenkung des Zugmittelabschnittes führt zu einer Zugbelastung auf die Zugmittelanordnung, die in eine Drehbewegung eines Antriebsritzels umgesetzt werden kann, das eine Übertragung in eine Längsverlagerung des Führungsmittels ermöglicht. Als Zugmittelanordnung ist insbesondere ein Seil- oder Riemenzug vorgesehen.

In weiterer Ausgestaltung der Erfindung ist der Scharnieranordnung eine koaxial zur Scharnierachse angeordnete Bogenverzahnung zugeordnet, die fest mit dem Karosserieteil verbunden ist, und die mit einem Antriebsritzel eines mit dem Führungsmittel in Wirkverbindung stehenden Übertragungsgetriebes kämmt. Die Bogenverzahnung weist vorzugsweise eine Kreisbogenform auf und ist konzentrisch zur Scharnierachse ausgerichtet. Das Übertragungsgetriebe stellt ein Zahnradgetriebe dar, dessen abtriebseitiges Zahnrad insbesondere auf eine flexible Zahnstange wirkt, die Teil der Führungsmittel zur Verlagerung der Laderaumabdeckung ist.

In weiterer Ausgestaltung der Erfindung sind das Übertragungsgetriebe und das Übersetzungsgetriebe miteinander kombiniert. Die Kombination wird vorzugsweise durch ein mehrstufiges Zahnradgetriebe gebildet.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch einen Heckbereich eines mit einer Heckklappe versehenen Kraftfahrzeugs, dessen Laderaum mit einer zwischen zwei unterschiedlichen Funktionsstellungen verlagerbaren Laderaumabdeckung versehen ist,
- Fig. 2: in vergrößerter, schematisierter Darstellung eine Ausführungsform einer erfindungsgemäßen Zwangskopplungseinrichtung für das Kraftfahrzeug nach Fig. 1 und
- Fig. 3: eine weitere Ausführungsform einer erfindungsgemäßen Zwangskopplungseinrichtung für das Kraftfahrzeug nach Fig. 1.

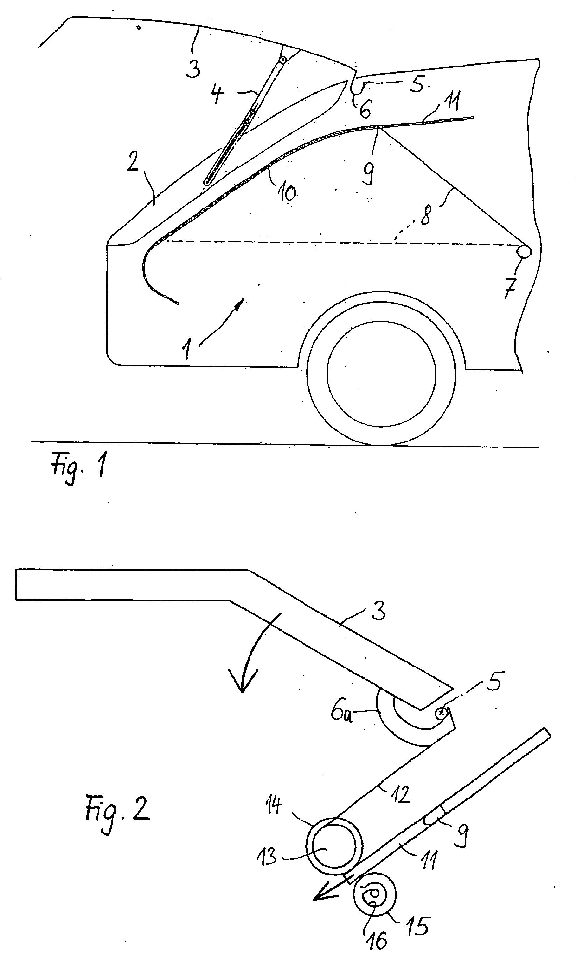

Ein Kraftfahrzeug in Form eines Personenkraftwagens weist gemäß Fig. 1 in einem Heckbereich einen Laderaum 1 auf, der heckseitig über einen Heckausschnitt 2 in einer Fahrzeugkarosserie zugänglich ist. Der Heckausschnitt 2 ist durch eine Heckklappe 3 verschließbar, die um eine Scharnierachse 5, die in Fahrzeugquerrichtung ausgerichtet ist, in einem Dachrahmenbereich der Fahrzeugkarosserie schwenkbeweglich gelagert ist. Eine Öffnungsbewegung der Heckklappe 3 wird durch eine Gasdruckfederanordnung 4 unterstützt. Die Heckklappe 3 ist mittels heckklappenseitiger Scharnierteile 6 einer Scharnieranordnung um die Scharnierachse 5 schwenkbeweglich gelagert.

Der Laderaum 1 ist durch eine Laderaumabdeckung 7 bis 9 abdeckbar. Die Laderaumabdeckung 7 bis 9 umfasst eine Wickelwelle 7, die vorzugsweise in einem Kassettengehäuse fahrzeugseitig drehbar gelagert ist. Auf der Wickelwelle 7 ist ein flexibles Flächengebilde 8 auf- und abwickelbar gehalten, wobei die Wickelwelle 7 in Aufwickelrichtung durch eine nicht dargestellte Wickelfeder permanent drehmomentbeaufschlagt ist. Ein in Auszugrichtung vorderes Stirnende des flexiblen Flächengebildes 8 ist mit einem Auszugsprofil 9 verbunden, das sich über die gesamte Breite des Flächengebildes 8 erstreckt und mit seitlich über die Seitenränder des Flächengebildes 8 hinausragenden Stirnbereichen in fahrzeugseitigen Führungen 10 parallel zur Wickelachse der Wickelwelle 7 verlagerbar gehalten ist. Die fahrzeugseitigen Führungen 10 sind an gegenüberliegenden Seitenbereichen des Laderaumes 1 vorgesehen und erstrecken sich bei der dargestellten Ausführungsform jeweils längs einer D-Säule der Fahrzeugkarosserie etwa von einer Heckspiegelkante bis in den Dachbereich des Fahrzeuginnenraumes. Die Heckspiegelkante entspricht in etwa einer Fahrzeuggürtellinie. Das Auszugsprofil 9 ist zwischen einer in Fig. 1 mit durchgezogener Linie dargestellten Komfortstellung, die die obere Endposition des Flächengebildes 8 darstellt, und einer unteren Endposition, die die horizontale Auszugsstellung des Flächengebildes 8 bildet, längs der fahrzeugseitigen Führungen 10 verlagerbar. Die beiden einander gegenüberliegenden fahrzeugseitigen Führungen 10 sind exakt parallel zueinander geführt, so dass eine gleichmäßige Parallelverlagerung des Auszugsprofils 9 relativ zur Wickelachse der Wickelwelle 7 ermöglicht ist. Dies bewirkt eine gleichmäßige Auszugs- oder Einzugsbewegung des Flächengebildes 8. Um die Verlagerung des Auszugsprofils 9 in den fahrzeugseitigen Führungen 10 zu ermöglichen, ist jede fahrzeugseitige Führung 10 mit einem mechanischen Führungsmittel 11 versehen, das im dargestellten Ausführungsbeispiel als flexible Zahnstange oder als flexible Welle mit einer verzahnungs- oder gewindeförmigen Außenprofilierung ausgebildet ist. Das Auszugsprofil 9 ist mit seinen gegenüberliegenden Stirnbereichen in nicht näher dargestellten Mitnehmern insbesondere lösbar gehalten, die fest mit dem jeweiligen Führungsmittel 11 verbunden sind. Das Auszugsprofil 9 kann somit bei Bedarf aus den Mitnehmern ausgehängt werden.

Um eine Zwangskopplung einer Verlagerungsbewegung des Auszugsprofils 9 mit einer Öffnungs- oder Schließbewegung der Heckklappe 3 zu bewirken, ist gemäß Fig. 2 dem Führungsmittel 11 eine Antriebseinheit 13 bis 16 zugeordnet, die durch ein Zahnradgetriebe verwirklicht ist. Das Führungsmittel 11 wird beidseitig flankiert von jeweils einem Antriebsrad 14, 15, die in unterschiedlichen Richtungen Linearkräfte auf das Führungsmittel 11 übertragen können. Das eine Antriebsrad 15 ist durch einen Federmotor 16 angetrieben. Das andere Antriebsrad 14 steht über einen Seil- oder Riemenzug 12, 13 mit der Heckklappe 3 in Wirkverbindung. Der Seil- oder Riemenzug umfasst eine Wickeltrommel 13, deren Wickeldurchmesser geringer ist als ein Teilkreisdurchmesser des als Zahnrad ausgeführten Antriebsrades 14, so dass je nach Gestaltung der unterschiedlichen Durchmesser der Wickeltrommel 13 und des Antriebsrades 14 ein gewünschtes Übersetzungsverhältnis erzielbar ist. Der Federmotor 16 des Antriebsrades 15 bewirkt ein Drehmoment auf das Antriebsrad in entgegengesetzter Drehrichtung zu dem Drehmoment, das durch die Zugbelastung des Seil- oder Riemenzuges auf das andere Antriebsrad 14 entsteht.

Ein heckklappenseitiger Scharnierteil 6a der Heckklappe 3 bildet einen exzentrisch zur Scharnierachse 5 spiralartig gekrümmten, formstabilen Scharnierarm, der als Umlenkmittel im Sinne der Erfindung dient. Hierzu weist eine Außenkrümmung des Scharnierarmes 6a eine Führungsprofilierung auf, die eine Zentrierung des Seilabschnittes 12 bei einer Umschlingung der Außenkrümmung des Scharnierarmes 6a bewirkt. Hierdurch wird ein Abrutschen des Seilabschnittes 12 von dem Scharnierarm 6a vermieden. Anhand der Fig. 2 ist gut erkennbar, dass in der geöffneten Stellung der Heckklappe 3 sich der Seilabschnitt 12 in seiner gestrafften, geradlinig und parallel zum Führungsmittel 11 verlaufenden Streckung befindet. In dieser Position ist das Auszugsprofil 9 in eine obere Komfortstellung verlagert. Sobald nun die Heckklappe 3 in Richtung des Pfeiles in ihre Schließstellung überführt wird, lenkt der starr an der Heckklappe 3 angeordnete Scharnierarm 6a den Seilabschnitt 12 aus und führt dadurch zwangsläufig zu einer Vergrößerung der benötigten Seillänge, was wiederum zu einem Abziehen eines weiteren Seilbereiches von der Wickeltrommel 13 führt. Selbstverständlich ist der Seilabschnitt 12 an dem Scharnierarm 6a an geeigneter Stelle befestigt. Die Umlenkung des Seilabschnittes 12 führt somit zu einer Drehbewegung der Wickeltrommel 13 und damit in dieser Antriebsrichtung auch zu einer Drehbewegung des Antriebsrades 14, so dass das Führungsmittel 11 in Richtung des Pfeiles schräg nach unten bewegt wird. Dadurch wird zwangsläufig auch das Auszugsprofil 9 nach unten bewegt. Vorzugsweise sind die Dimensionierungen des Verlagerungsweges des Führungsmittels 11 und des Schwenkweges der Heckklappe 3 so gestaltet, dass das Auszugsprofil 9 und das Flächengebilde 8 sich in der geschlossenen Position der Heckklappe 3 in ihrer horizontalen Funktionsstellung befinden.

Bei einem erneuten Öffnen der Heckklappe 3 erfolgt in entsprechend umgekehrter Reihenfolge eine allmähliche Streckung des Seilabschnittes 12, wobei die überschießende Seillänge durch eine Rückholfeder der Wickeltrommel 13 auf diese aufgewickelt wird. Die Verlagerungsbewegung des Führungsmittels und des Auszugsprofils 9 nach oben wird durch das gegenüberliegende Antriebsrad 15 bewirkt, dessen Federmotor 16 bei der Bewegung des Führungsmittels 11 nach unten gespannt wurde und der nun eine Rückbewegung des Führungsmittels 11 nach oben bewirkt.

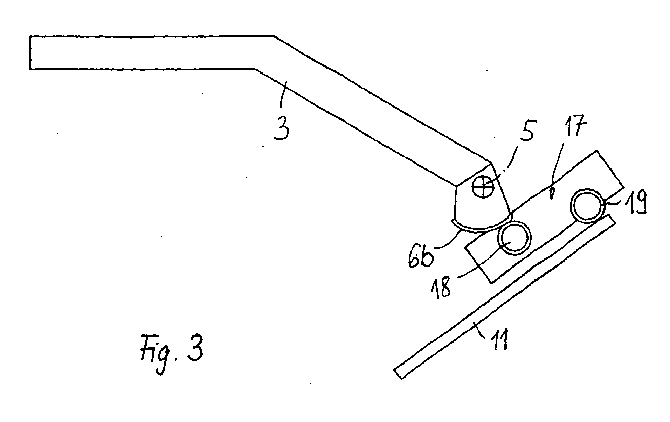

Bei der Ausführungsform gemäß Fig. 3 wird die Zwangskopplung zwischen Heckklappe 3 und Führungsmittel 11 für das Auszugsprofil 9 nicht durch einen Seilzug, sondern vielmehr durch ein Übertragungsgetriebe im Bereich der Scharnierachse 5 erzielt. Hierzu ist heckklappenseitig eine Bogenverzahnung 6b vorgesehen, die koaxial und konzentrisch zu der Scharnierachse 5 angeordnet ist und fest mit der Heckklappe 3 verbunden ist. Die Bogenverzahnung 6b kämmt mit einem Antriebsritzel 18 eines Übertragungsgetriebes 17, dessen endseitiges Abtriebsritzel 19 mit dem Führungsmittel 11, vorzugsweise in Form einer flexiblen Zahnstange, kämmt. In dem Übertragungsgetriebe 17 ist in nicht dargestellter Weise ein Übersetzungsgetriebe integriert, um analog zu der zuvor beschriebenen Ausführungsform eine Anpassung und Abstimmung zwischen Schwenkweg der Heckklappe 3 und Verlagerungsweg des Führungsmittels 11 zu erzielen. Vorzugsweise ist das Übertragungsgetriebe 17 einschließlich des Übersetzungsgetriebes als mehrstufiges Zahnradgetriebe ausgeführt, das in einer eigenen Gehäuseeinheit untergebracht ist, die wiederum fahrzeugseitig im Bereich der Scharnieranordnung befestigt und untergebracht werden kann.

## Patentansprüche

1. Zwangskopplungseinrichtung zwischen einem um eine Scharnierachse an einer Fahrzeugkarosserie angelenkten beweglichen Karosserieteil (3) und wenigstens einem Führungsmittel (11) zur Verlagerung einer Laderaumabdeckung (8) zwischen zwei unterschiedlichen Funktionsstellungen, wobei die Zwangskopplungseinrichtung mechanische Bewegungsübertragungsmittel (6a, 6b) aufweist, die mit dem Karosserieteil einerseits und dem Führungsmittel andererseits in Wirkverbindung stehen, wobei die Bewegungsübertragungsmittel (6a, 6b) im Bereich einer Scharnieranordnung des Karosserieteils (3) angeordnet sind, **dadurch gekennzeichnet, dass** die Bewegungsübertragungsmittel ein Übersetzungsgetriebe (17) umfassen, um einen Schwenkweg des Karosserieteils (3) auf einen Verlagerungsweg der Führungsmittel (11) abzustimmen.

2. Zwangskopplungseinrichtung nach Anspruch 1, **dadurch gekennzeichnet, dass** die Bewegungsübertragungsmittel eine Zugmittelanordnung (12 bis 14) umfassen, die mit den Führungsmitteln (11) in Wirkverbindung steht, und dass die Scharnieranordnung ein exzentrisch zu der Scharnierachse (5) angeordnetes und mit dem Karosserieteil (3) festes Umlenkmittel (6a) umfasst, das einen Zugmittelabschnitt (12) der Zugmittelanordnung bei einer Bewegung des Karosserieteiles auslenkt.

3. Zwangskopplungseinrichtung nach Anspruch 1, **dadurch gekennzeichnet, dass** der Scharnieranordnung eine koaxial zur Scharnierachse (5) angeordnete Bogenverzahnung (6b) zugeordnet ist, die fest mit dem Karosserieteil verbunden ist, und die mit einem Antriebsritzel (18) eines mit dem Führungsmittel in Wirkverbindung stehenden Übertragungsgetriebes (17) kämmt.

4. Zwangskopplungseinrichtung nach Anspruch 3, **dadurch gekennzeichnet, dass** das Übertragungsgetriebe und das Übersetzungsgetriebe miteinander kombiniert sind.

## Claims

1. Forced coupling device between a movable body part (3) hinge-connected about a hinge axis to a vehicle body and at least one guide means (11) for movement of a luggage area cover (8) between two different function positions, the forced coupling device having mechanical movement transmission means (6a, 6b) in a working connection with the body part on the one hand and with the guide means on the other hand, the movement transmission means (6a, 6b) being arranged in the area of a hinge arrangement of the body part (3), wherein the movement transmission means comprise a step-up gear (17) in order to match a swivel travel of the body part (3) to a movement travel of the guide means (11).

2. Forced coupling device according to Claim 1, wherein the movement transmission means comprise a pulling means arrangement (12 to 14) in a working connection with the guide means (11) and wherein the hinge arrangement comprises a deflecting means (6a) arranged eccentrically to the hinge axis (5) and fixed to the body part (3), said means deflecting a pulling means section (12) of the pulling means arrangement during a movement of the body part.

3. Forced coupling device according to Claim 1, wherein a spiral toothing (6b) arranged coaxially to the hinge axis (5) is assigned to the hinge arrangement, is firmly connected to the body part and meshes with a drive pinion (18) of a transmission gear (17) in a working connection with the guide means.

4. Forced coupling device according to Claim 3, wherein the transmission gear and the step-up gear are combined with one another.

## Revendications

1. Dispositif de couplage forcé entre une pièce de carrosserie (3) mobile articulée autour d'un axe de charnière sur une carrosserie de véhicule et au moins un moyen de guidage (11) pour le déplacement d'un système de recouvrement du compartiment à bagages (8) entre deux positions différentes de fonctionnement, sachant que le dispositif de couplage forcé présente des moyens mécaniques de transmission de mouvement (6a, 6b) qui sont en liaison fonctionnelle d'un côté avec la pièce de carrosserie et de l'autre côté avec le moyen de guidage, que les moyens de transmission de mouvement (6a, 6b) sont placés dans la zone d'un système de charnière de la pièce de carrosserie (3), **caractérisé en ce que** les moyens de transmission de mouvement comprennent un multiplicateur (17) pour adapter une trajectoire de pivotement de la pièce de carrosserie (3) à une trajectoire de déplacement des moyens de guidage (11).

2. Dispositif de couplage forcé selon la revendication 1, **caractérisé en ce que** les moyens de transmission de mouvement comprennent un mécanisme de traction (12 à 14) qui est en liaison fonctionnelle avec les moyens de guidage (11), et **en ce que** le système de charnière comprend un élément déflecteur (6a) placé de manière excentrique par rapport à l'axe de charnière (5) et fixé à la pièce de carrosserie (3), lequel élément dévie une section des moyens de traction (12) du mécanisme de traction lors d'un mouvement de la pièce de carrosserie.

3. Dispositif de couplage forcé selon la revendication 1, **caractérisé en ce qu'**est affectée au système de charnière une denture hélicoïdale (6b) disposée de façon coaxiale par rapport à l'axe de charnière (5), laquelle denture est reliée de manière fixe à la pièce de carrosserie et s'engrène dans un pignon d'entraînement (18) d'un mécanisme de transmission (17) en liaison fonctionnelle avec le moyen de guidage.

4. Dispositif de couplage forcé selon la revendication 3, **caractérisé en ce que** le mécanisme de transmission et le multiplicateur sont combinés l'un à l'autre.
